# EUROPÄISCHE PATENTANMELDUNG

(11) **EP 2 226 651 A1**
(43) Veröffentlichungstag der Anmeldung: **08.09.2010**
(21) Anmeldenummer: 09003110.5
(22) Anmeldetag: 04.03.2009
(51) Int. Cl.: G01V 8/10

(54) **Optoelektronischer Sensor**

(71) Anmelder: SICK AG, 79183 Waldkirch/Breisgau (DE)
(72) Erfinder: Hauske, Maximilian, 68161 Mannheim (DE); Waslowski, Kai, 79312 Emmendingen (DE); Merettig, Gerhard, 79350 Sexau (DE)
(74) Vertreter: Manitz, Finsterwald & Partner GbR

(57) **Zusammenfassung**

Ein optoelektronischer Sensor umfasst wenigstens einen Lichtsender (10) zur Aussendung von Lichtsignalen (x(t)) in einen Überwachungsbereich, wenigstens einen Lichtempfänger (12) zum Empfang von ausgesandten Lichtsignalen und eine Steuer- und/oder Auswerteeinheit zur Erzeugung eines Objektfeststellungssignals im Falle des Vorhandenseins eines Objektes im Überwachungsbereich in Abhängigkeit von den Ausgangssignalen des Lichtempfängers (12). Dabei sind die von einem jeweiligen Lichtsender (10) in den Überwachungsbereich ausgesandten Lichtsignale jeweils auf der Basis eines durch ein nach einem Frequenzspreizverfahren (Spread Spectrum) gespreizten und zur Erzeugung eines unipolaren Signals mit einem Offset (P_{DC}) beaufschlagten Ausgangssignals (14) erzeugt. Ein jeweiliger Lichtempfänger kann ein dessen Fotodiode nachgeschaltetes Hochpassfilter umfassen.

## Beschreibung

Die Erfindung betrifft einen optoelektronischen Sensor mit wenigstens einem Lichtsender zur Aussendung von Lichtsignalen in einen Überwachungsbereich, wenigstens einem Lichtempfänger zum Empfang von ausgesandten Lichtsignalen und einer Steuer- und/oder Auswerteeinheit zur Erzeugung eines Objektfeststellungssignals im Falle des Vorhandenseins eines Objektes im Überwachungsbereich in Abhängigkeit von den Ausgangssignalen des Lichtempfängers.

Derartige Sensoren können beispielsweise als mehrstrahlige Lichtgittersysteme zur Zugangsüberwachung eingesetzt werden, wobei insbesondere gefährliche Maschinenarbeitsbereiche oder bestimmte Räume innerhalb eines Gebäudes abgesichert werden sollen.

Wenn bei Sensoren der genannten Art ein Objekt in den Überwachungsbereich gelangt und dadurch der Lichtweg zwischen Lichtsender und Lichtempfänger unterbrochen wird, wird ein Objektfeststellungssignal generiert, das beispielsweise zum Abschalten einer Maschine und/oder zur Auslösung eines akustischen oder optischen Warnsignals führen kann.

Optoelektronische Sensoren wie beispielsweise Lichtschranken und Lichttaster sind im Bereich der Automatisierungstechnik weit verbreitet. Dort sind sie zahlreichen optischen und elektrischen Störsignalen ausgesetzt, die zu einem Fehlschalten oder einer Fehldetektion führen können. Dabei kann die Robustheit der Sensoren in gestörten Umgebungen durch geeignete Signalformen erhöht werden.

Bei den bisher üblichen Lichtschranken und Lichttastern werden im Allgemeinen periodische, gepulste Rechtecksignale mit geringem Tastverhältnis ausgesendet. Die Empfangssignale werden zunächst hochpassgefiltert (Wechselspannungs- oder AC-Kopplung) und anschließend ausgewertet, um zu entscheiden, ob ein Objekt vorhanden ist oder nicht (Detektion).

Im Bereich der Funk- und Radartechnik werden sogenannte Spread-Spektrum-Techniken (Frequenzspreizverfahren) eingesetzt, um die Robustheit der Signale gegenüber Störungen zu verbessern. Solche Frequenzspreizverfahren sind in "Spread Spectrum Communications Handbook", Marvin K. Simon et al., McGraw-Hill, 1994, näher beschrieben.

Periodische Signale sind aufgrund ihrer diskreten Spektrallinien generell anfällig für schmalbandige Störsignale. Zudem besitzen gepulste Rechtecksignale angesichts ihres sin(x)/x-förmigen Spektrums Tiefpasscharakter, das heißt der Großteil der Signalenergie wird um tiefe Frequenzen konzentriert. Da die AC-Kopplung üblicherweise mit analogen Hochpassfiltern niedriger Ordnung realisiert wird, die nur relativ flache Flanken besitzen, geht durch die AC-Kopplung ein gewisser Teil der Signalenergie verloren. Hinzu kommt, dass bei tiefen Frequenzen im kHz-Bereich zahlreiche Störsignale wie beispielsweise Tageslicht und künstliche Beleuchtung auftreten.

Der Erfindung liegt die Aufgabe zugrunde, einen verbesserten optoelektronischen Sensor der eingangs genannten Art zu schaffen. Dabei sollen insbesondere dessen Robustheit und Störsicherheit gegenüber einer Vielzahl unterschiedlicher Störquellen verbessert werden.

Erfindungsgemäß wird diese Aufgabe dadurch gelöst, dass die von einem jeweiligen Lichtsender in den Überwachungsbereich ausgesandten Lichtsignale jeweils auf der Basis eines durch ein nach einem Frequenzspreizverfahren (Spread Spectrum) gespreizten und zur Erzeugung eines unipolaren Signals mit einem Offset beaufschlagten Ausgangssignals erzeugt sind.

Aufgrund dieser Ausbildung kann die Robustheit und Störsicherheit des optoelektronischen Sensors gegenüber einer Vielzahl unterschiedlicher Störquellen deutlich verbessert werden. So ist es nunmehr insbesondere möglich, bipolare, das heißt die Werte "-1" und "+1" aufweisende Spreizsequenzen auf das unipolare optische Medium, dessen optische Leistung stets positiv ist, zu übertragen. Mit solchen bipolaren Spreizsequenzen können die günstigen Korrelationseigenschaften von Spreizsequenzen auf optische Sensoren übertragen werden, um Störungen zu unterdrücken und/oder eine Nutzertrennung zu ermöglichen.

Dabei umfasst ein jeweiliger Lichtsender bevorzugt Mittel zur Skalierung eines jeweiligen nach dem Frequenzspreizverfahren gespreizten und mit einem Offset beaufschlagten Ausgangssignals. Mit einer solchen Skalierung kann insbesondere erreicht werden, dass das jeweilige in den Überwachungsbereich ausgesandte Lichtsignal der mittleren optischen Sendeleistung der betreffenden Leuchtdiode (LED) des Lichtsenders entspricht.

Gemäß einer vorteilhaften praktischen Ausführungsform des erfindungsgemäßen optoelektronischen Sensors sind die von einem jeweiligen Lichtsender in den Überwachungsbereich ausgesandten Lichtsignale jeweils auf der Basis eines nach dem DSSS (Direct Sequence Spread Spectrum)-Frequenzspreizverfahren mit einer bipolaren Spreizsequenz multiplizierten Ausgangssignals erzeugt.

Um das Nutzsignal empfangsseitig zu entspreizen, umfasst ein jeweiliger Lichtempfänger zweckmäßigerweise Mittel, um das Empfangssignal mit der bipolaren Spreizsequenz zu multiplizieren.

Von Vorteil ist insbesondere auch, wenn ein jeweiliger Lichtsender Mittel umfasst, um das nach dem DSSS-(Direct Sequence Spread Spectrum)-Frequenzspreizverfahren mit einer bipolaren Spreizsequenz multiplizierte Ausgangssignal mit einer vorgebbaren Trägerfrequenz oder Trägerschwingung zu modulieren.

Ein jeweiliger Lichtempfänger umfasst dann zweckmäßigerweise Mittel zur Demodulation des mit der vorgebbaren Trägerfrequenz modulierten Empfangssignals. Dabei können zur Demodulation insbesondere Mittel zum Multiplizieren des Empfangssignals mit der Trägerfrequenz sowie ein diesen Mitteln nachgeordneter Tiefpass vorgesehen sein.

Durch die Modulation kann zusätzlich die Signalenergie zu höheren Frequenzen verschoben werden, um insbesondere Störsignalen auszuweichen und den Energieverlust durch die AC-Kopplung zu verringern. Es ist also optional eine Modulation mit einer Trägerschwingung möglich, was einen zusätzlichen Freiheitsgrad der Möglichkeit mit sich bringt, in ungestörte Frequenzbereiche auszuweichen, Nutzer im Frequenzbereich zu trennen und Störer insbesondere durch geeignete Sprungsequenzen zu unterdrücken.

Bei einem wenigstens einen DSSS-Lichtsender und wenigstens einen DSSS-Lichtempfänger umfassenden System kann die Schaltfrequenz beispielsweise 1/T betragen, was bedeutet, dass die Detektion alle T Sekunden bzw. im Takt T stattfindet. Das schmalbandige Sendesignal ist ein Rechtecksignal der Dauer Tₚ. Dabei kann die Signaldauer Tₚ gleich dem Takt T (Tₚ = T) sein, was einem kontinuierlichen Betrieb entspricht, oder auch kleiner als der Takt sein (Tₚ < T), was einem Pulsbetrieb entspricht, so dass Tₚ ≤ T ist. Das Sendesignal kann mit einer bipolaren, das heißt positive und negative Signalanteile aufweisenden Spreizsequenz multipliziert werden. Geeignete Spreizsequenzen besitzen gute Auto- und Kreuzkorrelationseigenschaften wie beispielsweise m-Sequenzen oder Gold-Codes, wodurch das ursprüngliche Sende- oder Ausgangssignal gespreizt wird. Durch die Verwendung unterschiedlicher Codes können Störungen mehrerer Sensoren untereinander und/oder gegenseitige Störungen der verschiedenen Pfade eines jeweiligen Lichtgitters vermieden werden. Danach kann das Signal mit der Trägerfrequenz, beispielsweise dem Kosinus einer vorgebbaren Frequenz moduliert werden. Danach kann der Offset hinzuaddiert werden, um ein unipolares, das heißt insbesondere rein positives Signal zu erhalten. Es ist dann beispielsweise eine solche Skalierung möglich, dass das Sendesignal der mittleren optischen Sendeleistung entspricht, die die Leuchtdiode (LED) des jeweiligen Lichtsenders ausstrahlt.

In einem jeweiligen DSSS-Lichtempfänger kann das einfallende Licht durch eine Fotodiode vorgegebener Empfindlichkeit in das Empfangssignal gewandelt werden. Um tieffrequente Störungen wie Tages- oder Kunstlicht zu unterdrücken, kann dieses Empfangssignal dann hochpassgefiltert werden (AC-Kopplung). Anschließend kann insbesondere eine Demodulation erfolgen, bei der das Signal durch Multiplikation mit dem Kosinus der genannten Frequenz und anschließender Tiefpassfilterung ins Basisband heruntergemischt wird. Danach kann das Signal mit der bipolaren Spreizsequenz multipliziert werden. Dabei wird das Nutzsignal entspreizt, wobei schmalbandige Störsignale gespreizt werden, wodurch ein Spreizgewinn erzielt wird. Das Signal kann anschließend insbesondere integriert und abgetastet werden, was bei rechteckigen Pulsen einer Korrelation entspricht. Anschließend kann eine Schwellwertentscheidung, das heißt Detektion erfolgen. Multiplikation und Integration können im Empfänger auch durch ein Optimalfilter (matched filter) ersetzt werden.

Gemäß einer weiteren vorteilhaften Ausführungsform des erfindungsgemäßen optoelektronischen Sensors sind die von einem jeweiligen Lichtsender in den Überwachungsbereich ausgesandten Lichtsignale jeweils auf der Basis eines nach dem FHSS-(Frequency Hopping Spread Spectrum)-Frequenzspreizverfahren mit einer zeitabhängigen Trägerfrequenz modulierten Ausgangssignals erzeugt, wobei insbesondere Frequenzsprünge gemäß einer Hopping-Sequenz vorgebbar sind.

Dabei umfasst ein jeweiliger Lichtempfänger zweckmäßigerweise Mittel zur Demodulation des mit der zeitabhängigen Trägerfrequenz modulierten Empfangssignals. Zur Demodulation können insbesondere Mittel zum Multiplizieren des Empfangssignals mit der zeitabhängigen Trägerfrequenz sowie ein diesen Mitteln nachgeordneter Tiefpass vorgesehen sein.

Auch im vorliegenden Fall kann ein jeweiliger Lichtempfänger insbesondere wieder Multiplikations- und Integrationsmittel oder ein Optimalfilter (matched filter) umfassen.

In einem solchen, wenigstens einen FHSS-Lichtsender und wenigstens einen FHSS-Lichtempfänger umfassenden System kann die Schaltfrequenz insbesondere wieder 1 /T betragen, was bedeutet, dass die Detektion alle T Sekunden stattfindet. Das schmalbandige Sendesignal, insbesondere ein Rechtecksignal der Dauer Tₚ, kann beispielsweise mit einem Kosinus der zeitabhängigen Frequenz moduliert werden, wodurch das Sende- oder Ausgangssignal spektral auf mehrere Frequenzen verteilt wird. Die Frequenzsprünge können gemäß einer Hopping-Sequenz ermittelt werden. Durch die Verwendung unterschiedlicher Hopping-Sequenzen können u.a. Störungen zwischen unterschiedlichen Sensoren vermieden werden. Danach kann der Offset hinzuaddiert werden, um ein unipolares, das heißt insbesondere rein positives Signal zu erhalten. Durch die Skalierung kann insbesondere wieder erreicht werden, dass das Sendesignal der mittleren optischen Sendeleistung entspricht, die die Leuchtdiode (LED) des jeweiligen Lichtsenders ausstrahlt.

In einem jeweiligen FHSS-Lichtempfänger wird das einfallende Licht durch eine Fotodiode vorgegebener Empfindlichkeit zunächst in das Empfangssignal gewandelt. Um tieffrequente Störer wie Tages- oder Kunstlicht zu unterdrücken, kann das Empfangssignal hochpassgefiltert werden (AC-Kopplung). Anschließend kann die Demodulation erfolgen, bei der das Signal insbesondere durch Multiplikation mit einem Kosinus der genannten Frequenz, das heißt Trägerfrequenz, gemäß der jeweiligen Hopping-Folge und anschließender Tiefpassfilterung ins Basisband heruntergemischt wird. Da das Sendesignal auf verschiedene Frequenzen verteilt ist, wird die Robustheit gegenüber schmalbandigen Störern erhöht. Anschließend kann das Signal wieder integriert und abgetastet werden, was bei rechteckigen Pulsen einer Korrelation entspricht. Anschließend kann eine Schwellwertentscheidung, das heißt Detektion, erfolgen. Multiplikation und Integration können im Empfänger jedoch auch wieder durch ein Optimalfilter (matched filter) ersetzt werden.

Gemäß einer weiteren vorteilhaften Ausführungsform des erfindungsgemäßen optoelektronischen Sensors sind die von einem jeweiligen Lichtsender in den Überwachungsbereich ausgesandten Lichtsignale jeweils auf der Basis eines nach dem THSS (Time Hopping Spread Spectrum)-Frequenzspreizverfahren gemäß einer Time-Hopping-Sequenz mit einer zeitabhängigen Verzögerung verzögerten Ausgangssignals erzeugt.

Dabei kann ein jeweiliger Lichtempfänger insbesondere wieder Multiplikations- und Integrationsmittel oder ein Optimalfilter (matched filter) umfassen.

Bevorzugt sind im Fall eines solchen THSS-Systems die Integrationszeitpunkte der Integrationsmittel an die Time-Hopping-Sequenz angepasst.

Bei einem solchen THSS-System kann die Schaltfrequenz 1/T betragen, das heißt die Detektion alle T Sekunden stattfinden. Ein pulsförmiges Sendesignal, insbesondere ein Rechtecksignal der Dauer Tₚ, die kleiner ist als T, kann gemäß einer Time-Hopping-Sequenz mit der zeitabhängigen Verzögerung verzögert werden, wodurch periodische Signalanteile vermieden und die Robustheit gegenüber schmalbandigen Störern wieder erhöht wird. Durch den Einsatz unterschiedlicher Time-Hopping-Sequenzen können Störungen mehrerer Sensoren untereinander vermieden werden. Dabei können beispielsweise Störungen zwischen unterschiedlichen Lichtgittem oder auch Störungen zwischen unterschiedlichen Pfaden eines jeweiligen Lichtgitters unterdrückt werden. Danach kann das Signal beispielsweise wieder mit dem Kosinus einer vorgegebenen Frequenz moduliert werden. Danach kann der Offset hinzuaddiert werden, um ein unipolares, das heißt insbesondere rein positives Signal zu erhalten. Durch eine Skalierung kann wieder erreicht werden, dass das Sendesignal der mittleren optischen Sendeleistung entspricht, die die Leuchtdiode (LED) des jeweiligen Lichtsenders ausstrahlt.

In einem jeweiligen THSS-Empfänger wird das einfallende Licht zunächst durch eine Fotodiode vorgebbarer Empfindlichkeit in das Empfangssignal gewandelt. Um tieffrequente Störungen wie insbesondere Tages- oder Kunstlicht zu unterdrücken, kann das Empfangssignal hochpassgefiltert werden (AC-Kopplung). Anschließend kann die Demodulation erfolgen, bei der das Signal durch Multiplikation mit einem Kosinus der insbesondere vorgebbaren Frequenz, das heißt Trägerfrequenz, und anschließender Tiefpassfilterung ins Basisband heruntergemischt wird. Danach kann das Signal der Dauer Tₚ integriert werden, wobei die Integrationszeitpunkte bevorzugt an die Time-Hopping-Sequenz angepasst sind. Danach kann das Signal wieder abgetastet werden, was bei rechteckigen Pulsen einer Korrelation entspricht. Anschließend kann eine Schwellwertentscheidung, das heißt Detektion, erfolgen. Multiplikation und Integration können im Empfänger auch wieder durch ein Optimalfilter (matched filter) ersetzt werden.

Von Vorteil ist insbesondere auch, wenn über einen jeweiligen Lichtsender und einen jeweiligen Lichtempfänger kombiniert gepulste Lichtsignale und zeitlich ausgedehnte Lichtsignale ausgesandt bzw. empfangen werden. Der optoelektronische Sensor kann also vorteilhafterweise auch so ausgeführt sein, dass er gemäß einem Hybridverfahren aus gepulsten Sendesignalen und zeitlich ausgedehnten Sendesignalen (vgl. insbesondere DSSS) arbeitet.

Durch die genannten Frequenzspreizverfahren (insbesondere DSSS, FHSS und THSS) wird eine Frequenzdiversität ausgenutzt, mit der die Robustheit und Störsicherheit der Sensoren gegenüber einer Vielzahl unterschiedlicher Störquellen verbessert werden. Zusätzlich kann durch Modulation die Signalenergie zu höheren Frequenzen verschoben werden, um Störsignalen auszuweichen und den Energieverlust durch die AC-Kopplung zu verringern.

Lichtsender und Lichtempfänger können zumindest teilweise auf einander gegenüberliegenden Seiten des Überwachungsbereichs angeordnet sein.

Hierbei wird zur Demodulation und zur Entspreizung ein geeignetes Synchronisationsverfahren vorausgesetzt. Geeignete Verfahren finden sich in: Spread Spectrum and CDMA: principles and applications, Valery P. Ipatov, Wiley Intersience 2005, ISBN 978-0-470-09180-7.

Grundsätzlich ist es auch möglich, Lichtsender und Lichtempfänger auf einer Seite des Überwachungsbereichs und einen Retroreflektor auf der gegenüberliegenden Seite des Überwachungsbereichs anzuordnen. Die zweite Variante entspricht einer Autokollimationsanordnung.

Lichtsender und Lichtempfänger können beispielsweise auch in einer Lichtgitteranordnung vorgesehen sein. Dabei kann jeweils auch mehreren Lichtsendern ein gemeinsamer Lichtempfänger zugeordnet und entsprechend die Anzahl der Lichtempfänger geringer als die Anzahl der Lichtsender sein.

Die Erfindung wird im Folgenden anhand von Ausführungsbeispielen unter Bezugnahme auf die Zeichnung näher erläutert; in dieser zeigen:
- Fig. 1: eine vereinfachte Prinzipdarstellung einer beispielhaften Ausführungsform eines Lichtsenders eines optoelektronischen DSSS-Sensors,
- Fig. 2: eine vereinfachte Prinzipdarstellung einer beispielhaften Ausführungsform eines Lichtempfängers eines optoelektronischen DSSS-Sensors,
- Fig. 3: eine vereinfachte Prinzipdarstellung einer beispielhaften Ausführungsform eines Lichtsenders eines optoelektronischen FHSS-Sensors,
- Fig. 4: eine vereinfachte Prinzipdarstellung einer beispielhaften Ausführungsform eines Lichtempfängers eines optoelektronischen FHSS-Sensors,
- Fig. 5: eine vereinfachte Prinzipdarstellung einer beispielhaften Ausführungsform eines Lichtsenders eines optoelektronischen THSS-Sensors und
- Fig. 6: eine vereinfachte Prinzipdarstellung einer beispielhaften Ausführungsform eines Lichtempfängers eines optoelektronischen THSS-Sensors.

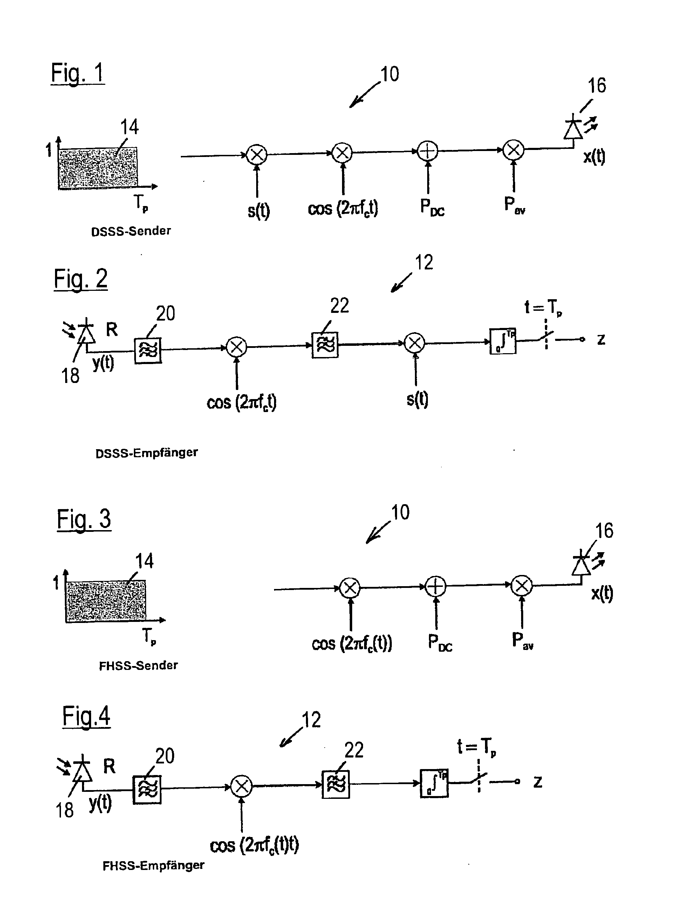

Die Fig. 1 und 2 zeigen die prinzipielle Struktur eines DSSS-(Direct Sequence Spread Spectrum)-Lichtsenders 10 (Fig. 1) zum Aussenden eines Lichtsignals in einen Überwachungsbereich bzw. die prinzipielle Struktur eines DSSS-Lichtempfängers 12 (Fig. 2) zum Empfang von ausgesandten Lichtsignalen eines optoelektronischen DSSS-Sensors.

Der optoelektronische Sensor kann ein oder mehrere solche DSSS-Lichtsender 10 und ein oder mehrere solche DSSS-Lichtempfänger 12 umfassen. Zudem kann der optoelektronische Sensor insbesondere eine Steuer- und/oder Auswerteeinheit zur Erzeugung eines Objektfeststellungssignals im Falle des Vorhandenseins eines Objektes im Überwachungsbereich in Abhängigkeit von den Ausgangssignalen z eines jeweiligen Lichtempfängers 12 umfassen.

Die Schaltfrequenz des Systems ist 1/T, was bedeutet, dass die Detektion alle T Sekunden bzw. im Takt T stattfindet. Das schmalbandige Sendesignal ist ein Rechtecksignal der Dauer Tₚ. Dabei kann die Signaldauer Tₚ gleich dem Takt T (T = T) sein, was einem kontinuierlichen Betrieb entspricht, oder auch kleiner als der Takt sein (Tₚ < T), was einem Pulsbetrieb entspricht, so dass Tₚ ≤ T ist. Die Fig. 1 und 2 beziehen sich auf eine Detektion der Dauer Tₚ. Diese kann im Takt T bzw. mit der Taktfrequenz 1/T mit Tₚ ≤ T beliebig in der Zeit fortgesetzt werden. Das Sendesignal wird mit einer bipolaren, das heißt positive und negative Signalanteile aufweisenden Spreizsequenz s(t) multipliziert. Geeignete Spreizsequenzen besitzen gute Auto- und Kreuzkorrelationseigenschaften wie beispielsweise m-Sequenzen oder Gold-Codes. Dadurch wird das ursprüngliche Sende- oder Ausgangssignal 14 gespreizt. Durch den Einsatz unterschiedlicher Codes können insbesondere Störungen mehrerer Sensoren untereinander vermieden werden. Danach kann das Signal beispielsweise mit einem Kosinus der Frequenz f_{c} (Trägerfrequenz) moduliert werden. Danach kann ein Offset P_{DC} addiert werden, um ein unipolares, das heißt insbesondere rein positives Signal zu erhalten. Durch eine Skalierung mit Pₐᵥ kann erreicht werden, dass in diesem systemtheoretischen Modell das Sende- oder ausgesandte Lichtsignal x(t) der mittleren optischen Sendeleistung entspricht, die die Leuchtdiode (LED) 16 des Lichtsenders (10) ausstrahlt.

Fig. 2 zeigt die prinzipielle Struktur des beispielhaften DSSS-Lichtempfängers 12 des optoelektronischen DSSS-Sensors.

Danach wird im Lichtempfänger 12 das einfallende Licht durch eine Fotodiode 18 der Empfindlichkeit R in das Empfangssignal y(t) gewandelt. Um tieffrequente Störer wie insbesondere Tages- oder Kunstlicht zu unterdrücken, kann das Empfangssignal y(t) hochpassgefiltert werden (AC-Kopplung). Anschließend erfolgt im Falle eines modulierten Sendesignals eine Demodulation, bei der das Signal durch eine Multiplikation mit einem Kosinus der Frequenz f_{c} und anschließender Tiefpassfilterung mittels eines Tiefpassfilters 22 ins Basisband heruntergemischt wird. Danach wird das Signal mit der bipolaren Spreizsequenz s(t) multipliziert. Dabei werden das Nutzsignal entspreizt und schmalbandige Störsignale gespreizt, wodurch ein Spreizgewinn erzielt wird. Das Signal kann anschließend integriert und abgetastet werden, was bei rechteckigen Pulsen einer Korrelation entspricht. Anschließend folgt eine Schwellwertentscheidung, das heißt Detektion. Multiplikation und Integration können im Empfänger auch durch ein Optimalfilter (matched filter) ersetzt werden.

Die von einem jeweiligen Lichtsender 12 in den Überwachungsbereich ausgesandten Lichtsignale x(t) sind also jeweils auf der Basis eines durch ein nach einem Frequenzspreizverfahren (hier beispielsweise DSSS) gespreizten und zur Erzeugung eines unipolaren Signals mit einem Offset P_{DC} beaufschlagten Ausgangssignals 14 erzeugt, wobei ein jeweiliger Lichtempfänger 12 ein dessen Fotodiode 18 nachgeschaltetes Hochpassfilter 20 umfassen kann.

Die Fig. 3 und 4 zeigen die prinzipielle Struktur eines FHSS-(Frequency Hopping Spread Spectrum)-Lichtsenders 10 (Fig. 3) zur Aussendung eines Lichtsignals x(t) in einen Überwachungsbereich bzw. die prinzipielle Struktur eines FHSS-Lichtempfängers 12 (Fig. 4) zum Empfang von ausgesandten Lichtsignalen eines optoelektronischen FHSS-Sensors.

Der optoelektronische Sensor kann ein oder mehrere solche FHSS-Lichtsender 10 und ein oder mehrere solche FHSS-Lichtempfänger 12 umfassen. Zudem kann der optoelektronische Sensor insbesondere wieder eine Steuer- und/oder Auswerteeinheit zur Erzeugung eines Objektfeststellungssignals im Falle des Vorhandenseins eines Objektes im Überwachungsbereich in Abhängigkeit von den Ausgangssignalen z des Lichtempfängers 12 umfassen.

Wie sich aus der Fig. 3 ergibt, beträgt die Schaltfrequenz des Systems wieder 1/T, was bedeutet, dass die Detektion alle T Sekunden stattfindet. Das schmalbandige Sende- oder Ausgangssignal 14, insbesondere ein Rechtecksignal der Dauer Tₚ, wird mit einem Kosinus der Frequenz f_{c}(t) (Trägerfrequenz) moduliert, die im vorliegenden Fall zeitabhängig ist, wodurch das Ausgangssignal 14 spektral auf mehrere Frequenzen verteilt wird. Die Frequenzsprünge werden gemäß einer Hopping-Sequenz ermittelt. Durch den Einsatz unterschiedlicher Hopping-Sequenzen werden insbesondere Störungen zwischen unterschiedlichen Sensoren vermieden. Danach wird der Offset P_{DC} hinzuaddiert, um ein unipolares, das heißt insbesondere rein positives Signal zu erhalten. Durch die Skalierung mit Pₐᵥ wird erreicht, dass in diesem systemtheoretischen Modell das ausgesandte Lichtsignal x(t) der mittleren optischen Sendeleistung entspricht, die die Leuchtdiode 16 des Lichtsenders 12 ausstrahlt.

Fig. 4 zeigt die prinzipielle Struktur des beispielhaften FHSS-Lichtempfängers 12 des optoelektronischen FHSS-Sensors.

Danach wird im FHSS-Lichtempfänger 12 das einfallende Licht zunächst wieder durch eine Fotodiode 18 der Empfindlichkeit R in das Empfangssignal y(t) gewandelt. Um tieffrequente Störungen wie insbesondere Tages- oder Kunstlicht zu unterdrücken, kann das Empfangssignal y(t) hochpassgefiltert werden (AC-Kopplung). Anschließend folgt die Demodulation, bei der das Signal durch eine Multiplikation mit einem Kosinus der Frequenz f_{c}(t) (Trägerfrequenz) gemäß der jeweiligen Hopping-Folge und anschließender Tiefpassfilterung mittels eines Tiefpassfilters 22 ins Basisband heruntergemischt wird. Da das Sende- oder Ausgangssignal 14 auf verschiedene Frequenzen verteilt ist, wird die Robustheit gegenüber schmalbandigen Störungen erhöht. Das Signal wird anschließend integriert und abgetastet, was bei rechteckigen Pulsen einer Korrelation entspricht. Anschließend folgt wieder eine Schwellwertentscheidung, das heißt Detektion. Die Multiplikation und Integration können im Empfänger auch durch ein Optimalfilter (matched filter) ersetzt werden.

Die von einem jeweiligen Lichtsender 12 in den Überwachungsbereich ausgesandten Lichtsignale x(t) werden also jeweils wieder auf der Basis eines durch ein nach einem Frequenzspreizverfahren (hier FHSS) gespreizten und zur Erzeugung eines unipolaren Signals mit einem Offset P_{DC} beaufschlagten Ausgangssignals 14 erzeugt. Ein jeweiliger Lichtempfänger 12 kann zur Hochpassfilterung des Empfangssignals y(t) (AC-Kopplung) ein Hochpassfilter 20 umfassen. Dabei sind im vorliegenden Fall die von einem jeweiligen Lichtsender 12 in den Überwachungsbereich ausgesandten Lichtsignale x(t) jeweils auf der Basis eines nach dem FHSS-Frequenzspreizverfahren mit einer zeitabhängigen Trägerfrequenz f_{c}(t) modulierten Ausgangssignals 14 erzeugt, wobei vorzugsweise Frequenzsprünge gemäß einer Hopping-Sequenz vorgebbar sind.

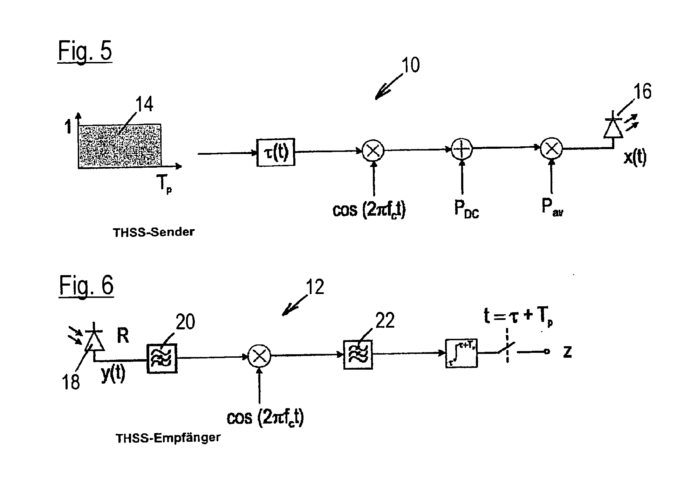

Die Fig. 5 und 6 zeigen die prinzipielle Struktur eines THSS-(Time Hopping Spread Spectrum)-Lichtsenders 10 (Fig. 5) zur Aussendung eines Lichtsignals x(t) in einen Überwachungsbereich bzw. die prinzipielle Struktur eines THSS-Lichtempfängers 12 (Fig. 6) zum Empfang von ausgesandten Lichtsignalen eines optoelektronischen THSS-Sensors.

Der optoelektronische Sensor kann ein oder mehrere solche THSS-Lichtsender 10 und ein oder mehrere solche THSS-Lichtempfänger 12 umfassen. Zudem kann der optoelektronische Sensor insbesondere wieder eine Steuer- und/oder Auswerteeinheit zur Erzeugung eines Objektfeststellungssignals im Falle des Vorhandenseins eines Objektes im Überwachungsbereich in Abhängigkeit von den Ausgangssignalen z des Empfängers 12 umfassen.

Wie sich aus Fig. 5 ergibt, beträgt die Schaltfrequenz des Systems 1/T, was bedeutet, dass die Detektion alle T Sekunden stattfindet. Das im vorliegenden Fall pulsförmige Sendesignal, insbesondere ein Rechtecksignal der Dauer Tₚ, die kleiner als T ist, wird gemäß einer Time-Hopping-Sequenz mit einer zeitabhängigen Verzögerung τ(t) verzögert, wodurch periodische Signalanteile vermieden und die Robustheit gegenüber schmalbandigen Störern erhöht wird. Durch den Einsatz unterschiedlicher Time-Hopping-Sequenzen werden Störungen mehrerer Sensoren untereinander vermieden. Danach kann das Signal mit einem Kosinus der Frequenz, das heißt Trägerfrequenz f_{c}, moduliert werden. Danach wird der Offset P_{DC} hinzuaddiert, um ein unipolares, insbesondere rein positives Signal zu erhalten. Durch die Skalierung mit Pₐᵥ wird wieder erreicht, dass in diesem systemtheoretischen Modell das Sende- oder Ausgangssignal x(t) der mittleren optischen Sendeleistung entspricht, die die Leuchtdiode 16 des Lichtsenders 10 ausstrahlt.

Fig. 2 zeigt die prinzipielle Struktur des beispielhaften THSS-Lichtempfängers 12 des optoelektronischen FHSS-Sensors.

Danach wird im THSS-Lichtempfänger 12 das einfallende Licht zunächst wieder durch eine Fotodiode 18 der Empfindlichkeit R in das Empfangssignal y(t) gewandelt. Um tieffrequente Störer wie insbesondere Tages- oder Kunstlicht zu unterdrücken, kann das Empfangssignal y(t) wieder mittels eines Hochpassfilters 20 hochpassgefiltert werden (AC-Kopplung). Anschließend folgt, im Falle eines modulierten Sendesignals, die Demodulation, bei der das Signal durch Multiplikation mit einem Kosinus der Trägerfrequenz f_{c} und anschließender Tiefpassfilterung mittels eines Tiefpasses 22 ins Basisband heruntergemischt wird. Danach wird das Signal der Dauer Tₚ integriert, wobei die Integrationszeitpunkte im vorliegenden Fall an die Time-Hopping-Sequenz angepasst sind. Anschließend wird das Signal abgetastet, was bei rechteckigen Pulsen einer Korrelation entspricht. Anschließend folgt eine Schwellwertentscheidung, das heißt Detektion. Multiplikation und Integration können im THSS-Lichtempfänger 12 wieder durch ein Optimalfilter (matched filter) ersetzt werden.

Auch im vorliegenden Fall sind also wieder die von einem jeweiligen Lichtsender 12 in den Überwachungsbereich ausgesandten Lichtsignale x(t) jeweils auf der Basis eines durch ein nach einem Frequenzspreizverfahren (hier THSS) gespreizten und zur Erzeugung eines unipolaren Signals mit einem Offset P_{DC} beaufschlagten Ausgangssignals 14 erzeugt, während ein jeweiliger Lichtempfänger 12 ein dessen Fotodiode 18 nachgeschaltetes Hochpassfilter 20 umfassen kann. Dabei sind im vorliegenden Fall die von einem jeweiligen Lichtsender 12 in den Überwachungsbereich ausgesandten Lichtsignale x(t) jeweils auf der Basis eines nach dem THSS-Frequenzspreizverfahren gemäß einer Time-Hopping-Sequenz mit einer zeitabhängigen Verzögerung τ(t) verzögerten Ausgangssignals 14 erzeugt.

### Bezugszeichenliste

- 10: Lichtsender
- 12: Lichtempfänger
- 14: Ausgangssignal, Sendesignal
- 16: Leuchtdiode
- 18: Fotodiode
- 20: Hochpassfilter
- 22: Tiefpassfilter
- f_{c}: Trägerfrequenz
- f_{c}(t): zeitabhängige Trägerfrequenz
- y(t): Empfangssignal
- s(t): Spreizsequenz
- x(t): ausgesandtes Lichtsignal
- z: Ausgangssignal
- Pₐᵥ: Skalierung
- P_{DC}: Offset
- R: Empfindlichkeit
- Tₚ: Pulsdauer

## Patentansprüche

1. Optoelektronischer Sensor mit wenigstens einem Lichtsender (10) zur Aussendung von Lichtsignalen (x(t)) in einen Überwachungsbereich, wenigstens einem Lichtempfänger (12) zum Empfang von ausgesandten Lichtsignalen und einer Steuer- und/oder Auswerteeinheit zur Erzeugung eines Objektfeststellungssignals im Falle des Vorhandenseins eines Objektes im Überwachungsbereich in Abhängigkeit von den Ausgangssignalen (z) des Lichtempfängers (12),
**dadurch gekennzeichnet,**
**dass** die von einem jeweiligen Lichtsender (10) in den Überwachungsbereich ausgesandten Lichtsignale (x(t)) jeweils auf der Basis eines durch ein nach einem Frequenzspreizverfahren (Spread Spectrum) gespreizten und zur Erzeugung eines unipolaren Signals mit einem Offset (P_{DC}) beaufschlagten Ausgangssignals (14) erzeugt sind.

2. Optoelektronischer Sensor nach Anspruch 1,
**dadurch gekennzeichnet,**
**dass** ein jeweiliger Lichtsender (10) Mittel (Pₐᵥ) zur Skalierung eines jeweiligen nach einem Frequenzspreizverfahren gespreizten und mit einem Offset (P_{DC}) beaufschlagten Ausgangssignals (14) umfasst.

3. Optoelektronischer Sensor nach Anspruch 1 oder 2,
**dadurch gekennzeichnet,**
**dass** die von einem jeweiligen Lichtsender (10) in den Überwachungsbereich ausgesandten Lichtsignale (x(t)) jeweils auf der Basis eines nach dem DSSS (Direct Sequence Spread Spectrum)-Frequenzspreizverfahren mit einer bipolaren Spreizsequenz (s(t)) multiplizierten Ausgangssignals (14) erzeugt sind.

4. Optoelektronischer Sensor nach Anspruch 3,
**dadurch gekennzeichnet,**
**dass** ein jeweiliger Lichtempfänger (12) Mittel umfasst, um das Empfangssignal (y(t)) mit der bipolaren Spreizsequenz (s(t)) zu multiplizieren.

5. Optoelektronischer Sensor nach Anspruch 3 oder 4,
**dadurch gekennzeichnet,**
**dass** ein jeweiliger Lichtsender (10) Mittel umfasst, um das nach dem DSSS (Direct Sequence Spread Spectrum)-Frequenzspreizverfahren mit einer bipolaren Spreizsequenz (s(t)) multiplizierte Ausgangssignal (14) mit einer vorgebbaren Trägerfrequenz (f_{c}) zu modulieren.

6. Optoelektronischer Sensor nach Anspruch 5,
**dadurch gekennzeichnet,**
**dass** ein jeweiliger Lichtempfänger (12) Mittel zur Demodulation des mit der vorgebbaren Trägerfrequenz (fc) modulierten Empfangssignals (y(t)) umfasst.

7. Optoelektronischer Sensor nach Anspruch 6,
**dadurch gekennzeichnet,**
**dass** zur Demodulation Mittel zum Multiplizieren des Empfangssignals (y(t)) mit der Trägerfrequenz (fc) sowie ein diesen Mitteln nachgeordneter Tiefpass (22) vorgesehen sind.

8. Optoelektronischer Sensor nach Anspruch 1 oder 2,
**dadurch gekennzeichnet,**
**dass** die von einem jeweiligen Lichtsender (10) in den Überwachungsbereich ausgesandten Lichtsignale (x(t)) jeweils auf der Basis eines nach dem FHSS (Frequency Hopping Spread Spectrum)-Frequenzspreizverfahren mit einer zeitabhängigen Trägerfrequenz (f_{c}(t)) modulierten Ausgangssignals (14) erzeugt sind, wobei vorzugsweise Frequenzsprünge gemäß einer Hopping-Sequenz vorgebbar sind.

9. Optoelektronischer Sensor nach Anspruch 8,
**dadurch gekennzeichnet,**
**dass** ein jeweiliger Lichtempfänger (12) Mittel zur Demodulation des mit der zeitabhängigen Trägerfrequenz (f_{c}(t)) modulierten Empfangssignals (y(t)) umfasst.

10. Optoelektronischer Sensor nach Anspruch 9,
**dadurch gekennzeichnet,**
**dass** zur Demodulation Mittel zum Multiplizieren des Empfangssignal (y(t)) mit der zeitabhängigen Trägerfrequenz (f_{c}(t)) sowie ein diesen Mitteln nachgeordneter Tiefpass (22) vorgesehen sind.

11. Optoelektronischer Sensor nach einem der vorhergehenden Ansprüche,
**dadurch gekennzeichnet,**
**dass** ein jeweiliger Lichtempfänger (12) Multiplikations- und Integrationsmittel oder ein Optimalfilter (matched filter) umfasst.

12. Optoelektronischer Sensor nach Anspruch 1 oder 2,
**dadurch gekennzeichnet,**
**dass** die von einem jeweiligen Lichtsender (10) in den Überwachungsbereich ausgesandten Lichtsignale (x(t)) jeweils auf der Basis eines nach dem THSS (Time Hopping Spread Spectrum)-Frequenzspreizverfahren gemäß einer Time-Hopping-Sequenz mit einer zeitabhängigen Verzögerung (τ[(t)) verzögerten Ausgangssignals (14) erzeugt sind.

13. Optoelektronischer Sensor nach Anspruch 12,
**dadurch gekennzeichnet,**
**dass** ein jeweiliger Lichtempfänger (12) Multiplikations- und Integrationsmittel oder ein Optimalfilter (matched filter) umfasst.

14. Optoelektronischer Sensor nach Anspruch 13,
**dadurch gekennzeichnet,**
**dass** die Integrationszeitpunkte der Integrationsmittel an die Time-Hopping-Sequenz angepasst sind.

15. Optoelektronischer Sensor nach einem der vorhergehenden Ansprüche,
**dadurch gekennzeichnet,**
**dass** das Ausgangs- oder Sendesignal (14) ein Rechtecksignal der Dauer Tₚ ist und die Detektion im Takt T erfolgt, wobei Tₚ ≤ T ist.

## Geänderte Patentansprüche

### Geänderte Patentansprüche gemäss Regel 137(2) EPÜ.

**1.** Optoelektronischer Sensor mit wenigstens einem Lichtsender (10) zur Aussendung von Lichtsignalen (x(t)) in einen Überwachungsbereich, wenigstens einem Lichtempfänger (12) zum Empfang von ausgesandten Lichtsignalen und einer Steuer- und/oder Auswerteeinheit zur Erzeugung eines Objektfeststellungssignals im Falle des Vorhandenseins eines Objektes im Überwachungsbereich in Abhängigkeit von den Ausgangssignalen (z) des Lichtempfängers (12), wobei Lichtsender (10) und Lichtempfänger (12) auf einer Seite des Überwachungsbereichs und ein Retroreflektor auf der gegenüberliegenden Seite des Überwachungsbereichs angeordnet sind,
**dadurch gekennzeichnet,**
**dass** Mittel vorgesehen sind, um die von einem jeweiligen Lichtsender (10) in den Überwachungsbereich ausgesandten Lichtsignale (x(t)) jeweils auf der Basis eines durch ein nach einem Frequenzspreizverfahren gespreizten und zur Erzeugung eines unipolaren Signals mit einem Offset (P_{DC}) beaufschlagten Ausgangssignals (14) zu erzeugen.

**2.** Optoelektronischer Sensor nach Anspruch 1,
**dadurch gekennzeichnet,**
**dass** ein jeweiliger Lichtsender (10) Mittel (Pₐᵥ) zur Skalierung eines jeweiligen nach einem Frequenzspreizverfahren gespreizten und mit einem Offset (P_{DC}) beaufschlagten Ausgangssignals (14) umfasst.

**3.** Optoelektronischer Sensor nach Anspruch 1 oder 2,
**dadurch gekennzeichnet,**
**dass** die von einem jeweiligen Lichtsender (10) in den Überwachungsbereich ausgesandten Lichtsignale (x(t)) jeweils auf der Basis eines nach dem Direct-Sequence-Spread-Spectrum-Frequenzspreizverfahren mit einer bipolaren Spreizsequenz (s(t)) multiplizierten Ausgangssignals (14) erzeugt sind.

**4.** Optoelektronischer Sensor nach Anspruch 3,
**dadurch gekennzeichnet,**
**dass** ein jeweiliger Lichtempfänger (12) Mittel umfasst, um das Empfangssignal (y(t)) mit der bipolaren Spreizsequenz (s(t)) zu multiplizieren.

**5.** Optoelektronischer Sensor nach Anspruch 3 oder 4,
**dadurch gekennzeichnet,**
**dass** ein jeweiliger Lichtsender (10) Mittel umfasst, um das nach dem Direct-Sequence-Spread-Spectrum-Frequenzspreizverfahren mit einer bipolaren Spreizsequenz (s(t)) multiplizierte Ausgangssignal (14) mit einer vorgebbaren Trägerfrequenz (f_{c}) zu modulieren.

**6.** Optoelektronischer Sensor nach Anspruch 5,
**dadurch gekennzeichnet,**
**dass** ein jeweiliger Lichtempfänger (12) Mittel zur Demodulation des mit der vorgebbaren Trägerfrequenz (fc) modulierten Empfangssignals (y(t)) umfasst.

**7.** Optoelektronischer Sensor nach Anspruch 6,
**dadurch gekennzeichnet,**
**dass** zur Demodulation Mittel zum Multiplizieren des Empfangssignals (y(t)) mit der Trägerfrequenz (fc) sowie ein diesen Mitteln nachgeordneter Tiefpass (22) vorgesehen sind.

**8.** Optoelektronischer Sensor nach Anspruch 1 oder 2,
**dadurch gekennzeichnet,**
**dass** die von einem jeweiligen Lichtsender (10) in den Überwachungsbereich ausgesandten Lichtsignale (x(t)) jeweils auf der Basis eines nach dem Frequency-Hopping-Spread-Spectrum-Frequenzspreizverfahren mit einer zeitabhängigen Trägerfrequenz (f_{c}(t)) modulierten Ausgangssignals (14) erzeugt sind, wobei vorzugsweise Frequenzsprünge gemäß einer Hopping-Sequenz vorgebbar sind.

**9.** Optoelektronischer Sensor nach Anspruch 8,
**dadurch gekennzeichnet,**
**dass** ein jeweiliger Lichtempfänger (12) Mittel zur Demodulation des mit der zeitabhängigen Trägerfrequenz (f_{c}(t)) modulierten Empfangssignals (y(t)) umfasst.

**10.** Optoelektronischer Sensor nach Anspruch 9,
**dadurch gekennzeichnet,**
**dass** zur Demodulation Mittel zum Multiplizieren des Empfangssignal (y(t)) mit der zeitabhängigen Trägerfrequenz (f_{c}(t)) sowie ein diesen Mitteln nachgeordneter Tiefpass (22) vorgesehen sind.

**11.** Optoelektronischer Sensor nach einem der vorhergehenden Ansprüche,
**dadurch gekennzeichnet,**
**dass** ein jeweiliger Lichtempfänger (12) Multiplikations- und Integrationsmittel oder ein Optimalfilter (matched filter) umfasst.

**12.** Optoelektronischer Sensor nach Anspruch 1 oder 2,
**dadurch gekennzeichnet,**
**dass** die von einem jeweiligen Lichtsender (10) in den Überwachungsbereich ausgesandten Lichtsignale (x(t)) jeweils auf der Basis eines nach dem Time-Hopping-Spread-Spectrum-Frequenzspreizverfahren gemäß einer Time-Hopping-Sequenz mit einer zeitabhängigen Verzögerung (τ(t)) verzögerten Ausgangssignals (14) erzeugt sind.

**13.** Optoelektronischer Sensor nach Anspruch 12,
**dadurch gekennzeichnet,**
**dass** ein jeweiliger Lichtempfänger (12) Multiplikations- und Integrationsmittel oder ein Optimalfilter umfasst.

**14.** Optoelektronischer Sensor nach Anspruch 13,
**dadurch gekennzeichnet,**
**dass** die Integrationszeitpunkte der Integrationsmittel an die Time-Hopping-Sequenz angepasst sind.

**15.** Optoelektronischer Sensor nach einem der vorhergehenden Ansprüche,
**dadurch gekennzeichnet,**
**dass** das Ausgangs- oder Sendesignal (14) ein Rechtecksignal der Dauer Tp ist und die Detektion im Takt T erfolgt, wobei Tₚ ≤ T ist.
